## Europäisches Patentamt
## European Patent Office
## Office européen des brevets

(19)

(11) Numéro de publication: **0 021 529**
**A1**

(12)

# DEMANDE DE BREVET EUROPEEN

(21) Numéro de dépôt: 80200578.5

(22) Date de dépôt: 18.06.80

(51) Int. Cl.³: **G 03 B 1/58**

(30) Priorité: 20.06.79 FR 7915840

(43) Date de publication de la demande:
07.01.81 Bulletin 81/1

(84) Etats Contractants Désignés:
CH DE FR GB LI NL SE

(71) Demandeur: SOCIETE D'OPTIQUE, DE MECANIQUE
D'ELECTRICITE ET DE RADIO O.M.E.R.A. - S.E.G.I.D.
49, rue Ferdinand Berthoud
F-95100 Argenteuil(FR)

(71) Demandeur: N.V. Philips' Gloeilampenfabrieken
Pieter Zeemanstraat 6
NL-5621 CT Eindhoven(NL)

(84) Etats Contractants Désignés:
CH DE GB LI NL SE

(72) Inventeur: Lazzati, Jean Paul
Société Civile S.P.I.D. 209 rue de l'Université
F-75007 Paris(FR)

(74) Mandataire: Pyronnet, Jacques et al,
Société Civile S.P.I.D. 209 rue de l'Université
F-75007 Paris(FR)

(54) Appareil cinématographique de prises de vues ou de projection comportant un dispositif d'antibourrage de film.

(57) Dans une caméra à mécanisme à tambour débiteur et à griffe, il est possible de réduire fortement les risques de bourrage en interposant entre la sortie de la table d'exposition du film et le tambour débiteur aval (13) une pièce spéciale fixe au moins en translation et éventuellement réglable (25) qui réduit la longueur utile de la boucle de mou aval du film (24) à une valeur inférieure à la distance entre deux vues, de façon que l'entraînement du film, après chaque prise de vue ait lieu sur la table d'exposition, d'abord à partir du tambour débiteur aval puis à partir de la griffe. L'invention peut aussi être mise en oeuvre avec ou sans pièce spéciale au moyen d'un réglage mutuel entre la position en rotation du tambour débiteur aval et une position donnée du mécanisme à griffe.
Application à un enregistreur de visée pour engin mobile.

./...

Croydon Printing Company Ltd.

FIG.2

2A

0° 2B

30° 2C

90° 2D

180° 2E

210° 2F

240° 2G

270° 2H

360° 2I

2-III-PHF 79-534

1

APPAREIL CINEMATOGRAPHIQUE DE PRISES DE VUES OU DE PROJECTION COMPORTANT UN DISPOSITIF D'ANTIBOURRAGE DE FILM.

L'invention concerne un appareil cinématographique de prises de vues ou de projection d'un film muni de perforations, présentant un magasin qui contient ledit film et qui est fermé par un couvercle, ledit appareil comportant un mécanisme à griffe pour entraîner de façon intermittente ledit film, une table d'exposition pour guider le film pendant son entraînement par la griffe, un noyau pour bobine débiteur de film et un noyau pour bobine récepteur de film, au moins un tambour débiteur muni de dents régulièrement espacées au pas desdites perforations pour entraîner à vitesse constante le film juste en aval du noyau débiteur et juste en amont du noyau récepteur, et un mécanisme d'entraînement pour entraîner en synchronisme le mécanisme à griffe et le (les) tambour(s) débiteur(s), un espace étant prévu à l'entrée et à la sortie de ladite table d'exposition pour permettre la formation de boucles de mou amont et aval du film.

L'invention a pour but d'éviter le bourrage du film lorsque l'appareil est en fonctionnement. Elle est applicable notamment à des caméras destinées à être montées dans un engin mobile et pouvant être soumises à des vibrations, des chocs ou à des accélérations brusques.

On connaît plusieurs types d'appareils cinématographiques tels que définis en préambule, qu'il s'agisse de caméras ou d'appareils de projection, le mécanisme d'entraînement à griffe étant cependant plus particulièrement adapté aux caméras. Pour des capacités faibles inférieures à 15 m de film environ, il est possible d'omettre le ou les tambours débiteurs car l'inertie de la bobine débitrice pleine est alors faible et la bobine débitrice montée à frottement doux sur son axe fixe peut être entraînée directement par l'intermédiaire du film tendu lors du mouvement moteur que la griffe exerce sur le film à chaque cycle. La bobine débitrice, montée elle aussi à friction sur son axe qui tourne à vitesse constante dans le sens de l'envidage du film résorbe directement la boucle de mou du film qui a tendance à se former à la sortie du couloir d'exposition pendant chaque mouvement moteur de la griffe. Il faut noter que dans cette cinématique du film à l'intérieur du magasin de la caméra, une contregriffe, ou un dispositif presseur du film, dans le couloir ou sur la table d'exposition est nécessaire pour éviter que le film ne soit tiré dans le couloir d'exposition pendant la prise de vues, sous l'action de la bobine réceptrice. Cependant, en l'absence de tambours, il peut y avoir détérioration du film car lorsque la griffe entre en contact avec le bord de la perforation immobile, il se produit un choc, la vitesse d'entraînement de la griffe étant alors faible mais en constante accélération. Si à cet instant le film est tendu entre la perforation en question et la bobine débitrice, l'inertie à vaincre est celle de la bobine débitrice chargée et selon les qualités du support du film photosensible ce choc peut, si l'effort résistant du film est important, à cause par exemple d'une bobine débitrice pleine avec une grande longueur de film ou d'un coefficient de frottement important d'un film couleur, endommager la perforation sous forme de piqûre, arrachement, allant jusqu'à l'agrandissement de la perforation, ce qui provoque la perte du pas.

L'utilisation de tambours débiteurs est donc nécessaire, surtout dans le cas de capacités de film élevées à introduire dans le magasin, de l'ordre de 20 à 30 mètres, pour soulager l'action de la griffe lors de l'escamotage des vues. Elle permet de réaliser une boucle de mou du film du côté de la bobine débitrice, entre un tambour débiteur et l'entrée du couloir d'exposition, d'une valeur égale ou supérieure au pas du film et de ce fait la griffe ne doit plus entraîner que la longueur de film correspondant à cette boucle dont l'inertie est négligeable. Une boucle de même longueur utile doit être formée au chargement du côté bobine réceptrice, entre la sortie du couloir d'exposition et un tambour débiteur, pour éviter que le film ne soit entraîné par la bobine réceptrice, dans le couloir d'exposition, pendant la prise de vues. Dans ces conditions, le montage des bobines débitrice et réceptrice étant le même que pour les caméras ne comportant pas de tambour débiteur comme décrit ci-dessus, le film est tendu et entraîné à une vitesse constante v entre chaque bobine et chaque tambour débiteur correspondant. Les tambours débiteurs tournent à vitesse constante, ces vitesses étant égales et il est possible d'avoir un tambour débiteur unique, le film étant entraîné de part et d'autre de ce tambour unique. Par contre, le long du couloir d'exposition, le film est entraîné de façon intermittente cyclique par la griffe en regard de la fenêtre d'exposition. Chaque cycle d'avancement du film, de durée $\tau$ se caractérise par une durée de repos pendant laquelle une prise de vues est effectuée, suivie d'une durée complémentaire d'avancement du film sous l'action de la griffe, entre les deux boucles de mou, d'une longueur $\ell$ au moins égale à celle entre deux vues adjacentes sur le film. On peut ainsi définir une vitesse moyenne d'avancement du film égale à $\ell/\tau$. Grâce à un synchronisme approprié entre le mouvement du mécanisme à griffe et celui du ou des débiteurs on réalise l'égalité des vitesses : $\ell/\tau$ = v. Dans ces conditions le risque de détérioration du film par la griffe est amoindri par rapport à ce qu'il est pour des caméras ne comportant pas de tambour débiteur. Cependant l'expérience montre que ce risque demeure surtout pour une caméra soumise à des chocs ou des accélérations brusques, pendant son utilisation, qui sont susceptibles de perturber le mouvement d'entraînement du film par la griffe soit par agrandissement d'une perforation soit par déplacement intempestif du film le long de la table d'exposition, de telle manière que la synchronisation nécessaire entre la position du film et celle de la griffe le long du couloir d'exposition soit perdue, la griffe ne rencontrant plus une perforation lors de son retour périodique, mais le bord du film qu'elle soulève et contre lequel elle glisse sans entraîner le film. Les tambours débiteurs continuant pendant ce temps à fournir régulièrement du film, il se produit le phénomène connu de bourrage de la caméra qui met cette dernière hors service.

L'appareil cinématographique selon l'invention permet de résoudre le problème technique posé au paragraphe précédent, étant remarquable en ce qu'il est muni de moyens d'ajustage en aval de la table d'exposition pour ajuster la longueur de la boucle de mou aval afin que ladite boucle de mou aval du film située à la sortie de la table d'exposition soit résorbée, après chaque prise de vue, juste avant l'instant où ladite griffe pénètre dans une perforation du film avec un mouvement de translation destiné à entraîner ledit film, la longueur utile de ladite boucle de mou aval du film étant toujours inférieure à l'espacement entre deux vues du film.

Dans un mode de réalisation, l'appareil cinématographique selon l'invention est remarquable en ce qu'il est muni de moyens de positionnement pour ajuster mutuellement la position en rotation desdites dents du tambour débiteur entraînant le film en aval de la table d'exposition par rapport à une position donnée de la griffe afin que ladite boucle de mou aval du film située à la sortie de la table d'exposition soit résorbée, après chaque prise de vue, juste avant l'instant où ladite griffe pénètre dans une perforation du film avec un mouvement de translation destiné à entraîner ledit film, la longueur utile de ladite boucle de mou aval du film étant toujours inférieure à l'espacement entre deux vues du film.

Dans un autre mode de réalisation, compatible avec le précédent, l'appareil cinématographique selon l'invention est remarquable en ce qu'il comporte en outre une pièce spéciale fixe au moins en translation interposée sur le trajet du film entre la sortie de ladite table d'exposition et ledit tambour débiteur situé juste en amont du noyau récepteur, la disposition et le profil de ladite pièce spéciale étant conçus pour que ladite boucle de mou aval du film située à la sortie de la table d'exposition soit résorbée, après chaque prise de vue, juste avant l'instant où ladite griffe pénètre dans une perforation du film avec un mouvement de translation destiné à entraîner ledit film, la longueur utile de ladite boucle de mou aval du film étant toujours inférieure à l'espacement entre deux vues du film. L'idée de base de l'invention consiste à faire en sorte que la synchronisation entre la position relative du film et de la griffe le long de la table d'exposition ne soit plus établie à partir du fonctionnement correct de la griffe et éventuellement de la contregriffe par rapport au film pour chaque cycle de la griffe, mais uniquement à partir du mouvement du tambour débiteur situé juste en amont de la bobine réceptrice, soit du tambour aval. Ainsi, en fonctionnement normal, à chaque cycle, la boucle aval est résorbée pendant une faible partie du cycle de la griffe, le film se tend et est mis en mouvement à la vitesse constante v par le mécanisme à tambour débiteur, le long du couloir d'exposition. Juste après la résorption de la boucle aval, la griffe pénètre dans la perforation devenue mobile et sa vitesse devenant supérieure à la vitesse v
imposée par le mécanisme à tambour débiteur, elle rencontre dans son
mouvement de translation la paroi aval de la perforation, pendant sa
phase d'accélération, et entraîne à son tour le film de telle façon que
la boucle aval se reforme. Si pour une raison quelconque, lors d'un cycle, un décalage se produit entre le film et la griffe, par exemple à
cause d'un agrandissement d'une perforation par la griffe, ce décalage
intempestif vers l'amont est compensé, au cycle suivant, du fait que le
film sera entraîné légèrement plus tôt par le mécanisme à tambour débiteur, eu égard au fait que la boucle de mou aval était insuffisamment
formée au cycle précédent. La synchronisation est donc assurée à l'instant où la griffe pénètre dans une perforation du film, ceci restant
vrai si le décalage intempestif a lieu en sens inverse du sens exemplifié ci-dessus, c'est-à-dire vers l'aval.

Il faut noter qu'on connaît du brevet français n°
1 518 193 un dispositif à griffe pour l'entraînement pas à pas sur un
trajet donné d'un support d'informations en bande souple présentant
des perforations, ce dispositif comprenant un organe pour entraîner la
griffe ainsi qu'un agencement adapté pour déplacer cette bande avant
que cette griffe ne pénètre dans l'une de ces perforations de manière
que cette bande soit déjà en mouvement lorsque la griffe pénètre dans
l'une de ces perforations. Cependant, des différences notables existent entre ce dispositif et le mécanisme d'antibourrage selon l'invention : en premier lieu, le problème technique posé est totalement différent puisqu'il s'agit d'un mouvement d'entraînement intermittent d'un
film que l'on souhaite très rapide sans endommager les perforations du
film. Dans ce but, le film est essentiellement entraîné par deux cylindres, la griffe ne rejoignant une perforation qu'un peu avant la fin de
la phase de déplacement du film. D'autre part il n'y a pas de boucles
de mou du film alors que selon la présente invention ces dernières
jouent un rôle prépondérant, et la synchronisation entre la position du
film et celle de la griffe est toujours assurée par la griffe en association avec un dispositif presseur ou pince faisant office de contregriffe, ce qui n'est pas le cas dans la présente invention comme décrit
au paragraphe précédent, la présence de la contregriffe n'étant d'ailleurs plus indispensable comme il sera expliqué ci-dessous.

6

La description suivante, en regard des dessins annexés, le tout donné à titre d'exemple fera bien comprendre comment l'invention peut être réalisée.

La figure 1 est une vue de dessus d'un magasin de caméra, couvercle enlevé, qui montre un mode de réalisation de l'invention.

La figure 2 est, selon l'invention, un diagramme explicitant différentes phases du mouvement relatif entre le mécanisme à tambour débiteur, le film et la griffe lorsque cette dernière parcourt un cycle.

La figure 3 est un diagramme angulaire des positions relatives : en 3A du film selon l'art antérieur, en 3B de l'obturateur, en 3C de la contregriffe et en 3D du film selon l'invention.

La figure 4 montre, selon la même vue qu'à la figure 1, un autre mode de réalisation de l'invention.

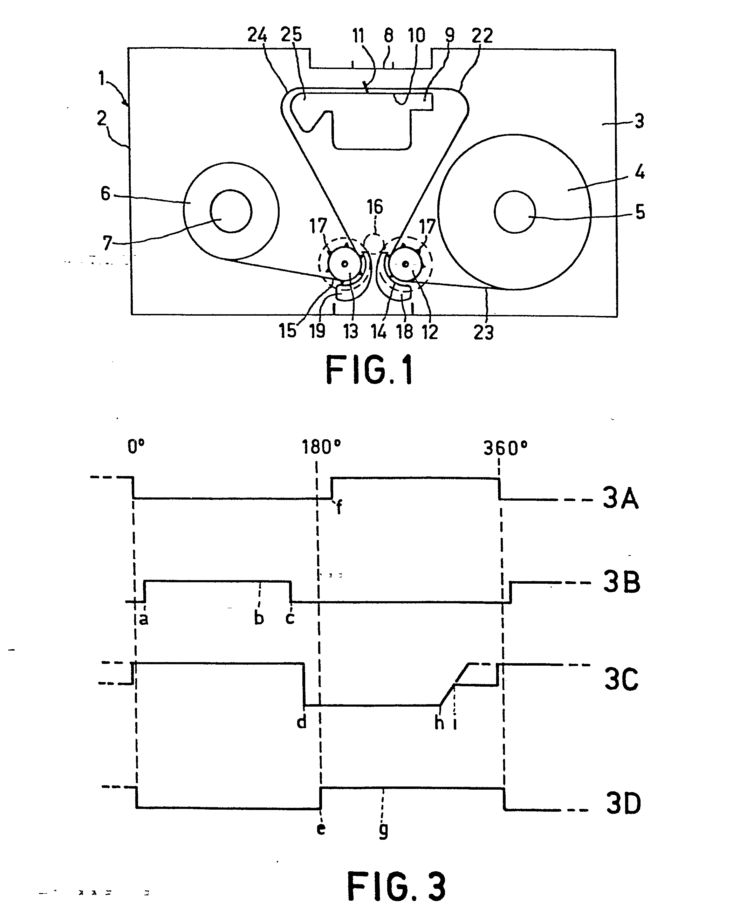

La figure 1 représente un magasin de caméra 1 vu de dessus, dont le couvercle a été enlevé, ce magasin pouvant être détachable ou faire partie intégrante de la caméra. Entre les bords latéraux symbolisés par la ligne fermée en trait plein 2 et sur une plaque de base 3 constituant le fond du magasin figurent une bobine débitrice 4 montée à rotation à frottement doux dans les deux sens de rotation autour de son noyau débiteur fixe 5 et une bobine réceptrice 6 montée à rotation à frottement doux dans les deux sens de rotation autour de son noyau récepteur 7 qui, en fonctionnement, tourne dans le sens rétrograde. En regard de la fenêtre d'exposition 8 du film figure une plaque métallique 9 faisant office à la fois de carter et de support pour le mécanisme à griffe et le couloir ou la table d'exposition 10. Le mécanisme à griffe, d'un type connu, peut comporter une ou deux griffes et éventuellement une contregriffe. Dans la suite de la description, on suppose pour simplifier l'exposé, que la griffe est unique, étant située très près du bord antérieur de la plaque 9, son extrémité étant visible en 11 à la figure 1, et qu'elle entraîne le film par son bord supérieur, au niveau des perforations, de façon que le bord supérieur du film proprement dit s'applique contre le bord antérieur de la plaque 9 qui fait alors partie de la table d'exposition, étant poli à cet effet.

Un mécanisme à tambour débiteur d'un type connu comporte par exemple un premier tambour débiteur 12 qui entraîne le film à vitesse constante juste en aval de la bobine débitrice 4 et un deuxième tambour débiteur 13 qui entraîne le film à la même vitesse que le premier, juste en amont de la bobine réceptrice 6. Tels que représentés à la figure 1, les deux tambours débiteurs tournent dans le sens rétrograde. Ils sont entraînés par une roue 14, respectivement 15, représentées en trait interrompu, ces deux roues ayant le même nombre de dents et étant engrenées sur le même pignon 16. Les tambours 12 et 13 comportent un certain nombre de dents 17, par exemple 6 dents régulièrement espacées au pas des perforations du film, soit, à raison d'une perforation par vue, au pas des vues du film. La disposition des dents 17 est similaire à celle de la griffe, c'est-à-dire qu'une couronne de dents unique, pour chaque tambour débiteur, attaque le film au niveau des perforations de son bord supérieur. De préférence, chaque tambour débiteur entraîne le film par plusieurs dents simultanément. Sur la figure 1 le film est entraîné par au moins deux dents en permanence. Cette caractéristique technique est fonction à la fois du nombre de dents disposées à la périphérie du tambour et de la longueur de la partie de circonférence du tambour contre laquelle le film est appliqué. De façon connue, des dispositifs presseurs 18 et 19 soumis à des ressorts de rappel appliquent le film sur une partie prédéterminée de la périphérie de chaque tambour. A titre d'équivalent, des galets de renvoi peuvent remplir la même fonction. Le synchronisme entre le pignon 16 et la griffe 11 est tel que pour un cycle de la griffe 11 chaque tambour 12, 13, a tourné d'un espacement entre dents, le film ayant progressé d'une vue. De façon connue, le mécanisme à tambour débiteur peut comporter un tambour débiteur unique, le film étant maintenu pressé de part et d'autre de ce tambour débiteur à l'aide de galets auxiliaires de renvoi.

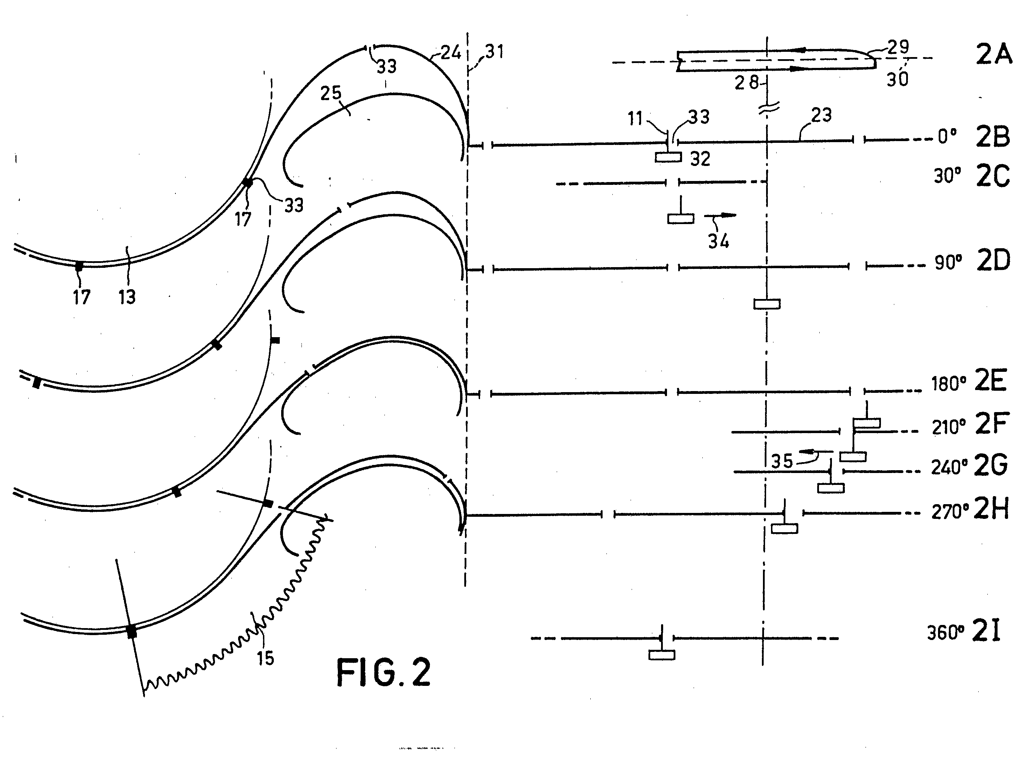

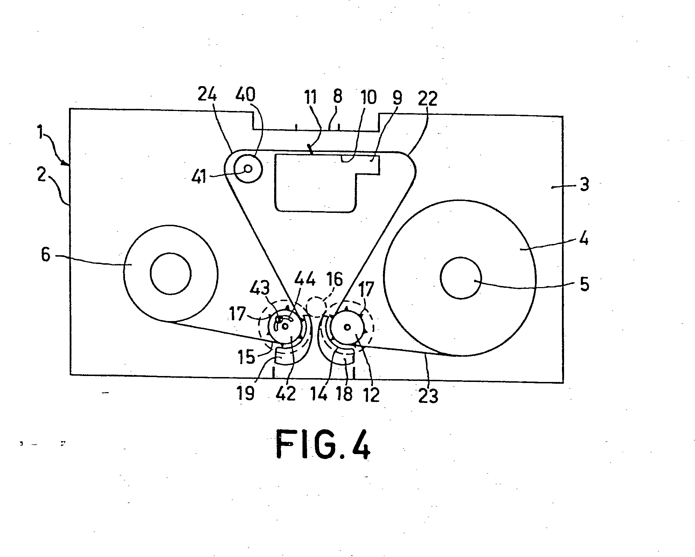

Lors du chargement du magasin une première boucle de mou amont 22 du film 23 est formée, dans un espace prévu à cet effet, de façon connue à l'entrée de la table d'exposition 10, d'une longueur supérieure à un espacement entre vues du film, c'est-à-dire telle que lors du fonctionnement de l'ensemble du dispositif d'entraînement du film, cette boucle ne soit jamais entièrement résorbée. De même une boucle de mou aval 24 est formée, cette boucle ayant, selon l'invention, une longueur utile nettement inférieure à un espacement entre vues du film. Selon l'invention, l'extrémité aval 25 de la plaque métallique 9 revêt une forme spéciale sensiblement calquée sur la forme que prend naturellement la boucle 24 après la mise en place du film, en fonction de la rigidité propre de ce dernier. Selon un autre mode de réalisation de l'invention, la pièce spéciale 25 est séparable de la plaque 9, étant solidarisée à cette dernière par tout moyen connu après un réglage adéquat de leurs positions respectives. La partie 25 peut aussi être solidaire du couvercle du magasin par rapport auquel elle est réglable ou non réglable, de façon telle que lorsque le couvercle est mis en place elle occupe la place indiquée sur la figure 1. Ce dernier mode de réalisation permet de ne rien modifier à l'intérieur d'un magasin connu. Il est cependant moins avantageux que le précédent dans la mesure où tel couvercle supportant la pièce spéciale doit être adapté à telle caméra suite à un réglage qui est explicité ci-dessous, les couvercles n'étant pas interchangeables alors qu'ils le sont dans le mode de réalisation préféré pour lequel la pièce spéciale 25 est incorporée au magasin. La mise en oeuvre de l'invention suppose en outre un réglage préliminaire à la mise en service de la caméra ou de l'appareil de projection, ce réglage étant en principe acquis pour la durée de vie de l'appareil sauf révision de ce dernier. A partir de ce qui est décrit ci-dessus, lors du premier chargement du magasin, ledit réglage consiste à positionner le mécanisme d'entraînement du film à l'intérieur de la plage angulaire du cycle de la griffe pour laquelle la contregriffe, si elle existe, vient de s'escamoter du film et pour laquelle la griffe n'est pas encore engagée à travers une perforation du film. Cette plage angulaire couvre habituellement quelques dizaines de degrés, par exemple 20 degrés. Le film n'étant alors pas retenu par le mécanisme à griffe doit être maintenu par des moyens extérieurs dans sa position correcte sur la table d'exposition et la pièce spéciale 25 est amenée au contact du bord supérieur du film de façon que la boucle de mou 24 soit entièrement résorbée, et solidarisée dans cette position à la plaque 9. Le fonctionnement du mécanisme d'entraînement du film ainsi obtenu, qui empêche le bourrage de la caméra, est expliqué ci-dessous en référence aux figures 2 et 3. De préférence la pièce spéciale 25 fait partie intégrante de la plaque 9 qui n'est pas réglable en position et le réglage initial décrit ci-dessus se fait à partir du tambour débiteur 13 de la façon suivante (voir figure 1) : le film et le mécanisme à griffe étant dans leurs positions correctes pour le réglage indiquées ci-dessus, on fait pivoter le tambour 13 dans le sens rétrograde tout en immobilisant les éléments 12, 14 et 16 jusqu'à ce que le film soit tendu contre le bord poli de la pièce spéciale 25. Pour réaliser ce pivotement du tambour 13, soit on le fait pivoter par rapport à la roue dentée 15 déjà engrenée sur le pignon 16 et donc immobile, après quoi on le solidarise à cette roue dentée par tout moyen connu, soit, de préférence, le tambour 13 et la roue 15 étant déjà calés l'un par rapport à l'autre, on déplace l'ensemble 13,15 par rapport au pignon 16 de façon à engrener la bonne dent de la roue 15, c'est-à-dire celle qui réalise le réglage décrit ci-dessus, étant donné qu'un très léger déplacement du pignon 16 est possible sans sortir de la plage angulaire du cycle indiquée plus haut. A cet effet, il est nécessaire que le nombre de dents de la roue 15 (et la roue 14) soit suffisamment grand, sans changer le rapport de denture par rapport au pignon 16, pour qu'il existe au moins une position de réglage possible pour la roue 15. Par exemple, pour une plage angulaire de 20° et des tambours débiteurs à 6 dents, le nombre minimal de dents des roues 14 et 15 doit être au moins égal à :

$$\frac{360}{20} \times 6 = 108$$

Lorsque le réglage initial de la position du tambour débiteur 13 a été effectué comme indiqué ci-dessus, on peut prévoir de repérer les positions relatives du tambour 13 et de la griffe 11 en vue de démontages ultérieurs de la caméra. Par exemple, le mécanisme d'entraînement étant actionné manuellement de façon à placer la griffe 11 dans une position prédéterminée, des points de repère sont inscrits en regard sur le débiteur 13 et par exemple sur le dispositif presseur 19 ou une partie fixe du magasin proche du tambour 13.

Pour un film de 16 mm, l'image occupe 14 mm, ce qui laisse une marge de 1 mm de chaque côté, contre laquelle le film peut frotter, à l'exclusion de toute autre partie du film afin d'éviter des rayures. Bien que ce type de film comporte des perforations disposées symétriquement de chaque côté, son entraînement a lieu de préférence du seul côté antérieur, les dents des débiteurs 12 et 13 étant disposées vers le haut à cet effet. Cette caractéristique technique connue permet d'éviter un couple de renversement sur le film qui pourrait ainsi se mettre en biais et se coincer. L'entraînement du film par un seul côté convient pour des appareils cinématographiques lents, fonctionnant à une vitesse de l'ordre de 16 images par seconde. Pour des appareils rapides, notamment pour des projecteurs ou des caméras 70 mm, il est connu de doubler tous les organes d'entraînement de façon à entraîner le film des deux côtés à la fois, c'est-à-dire d'utiliser une griffe et une contregriffe à deux dents et des tambours débiteurs à deux couronnes de dents, ces dispositions restant compatibles avec l'objet de l'invention.

La figure 2A représente, par rapport à l'axe optique de visée 28 représenté en trait mixte, le mouvement de l'extrémité de la griffe 11 représenté par une courbe fermée en trait plein 29 par rapport au niveau du film représenté par une ligne en trait interrompu 30. Lorsque l'extrémité de la griffe parcourt la courbe 29 à vitesse variable, par exemple sous l'action de cames, chaque dent du ou des tambours débiteurs parcourt à vitesse constante une distance égale à la longueur entre deux perforations, soit la longueur entre deux vues à la périphérie du tambour. Le repérage de la position angulaire d'une dent par rapport à l'axe du tambour débiteur peut donc servir à déterminer dans quelle phase du cycle de la griffe on se trouve. Pour un tambour débiteur à 6 dents, par exemple un angle de 60° correspond donc à un cycle soit 360° pour la griffe. Selon ces conventions, différentes phases d'un cycle illustrant la mise en oeuvre de l'invention ont été représentées aux figures 2B à 2I, pour un fonctionnement normal. La partie de ces figures située à droite d'une ligne en trait interrompu 31 montre la partie du film 23 située contre la table d'exposition 10 non représentée, ainsi que la griffe 11 et son support symbolisé par le rectangle 32. Les perforations du film sont référencées 33. A gauche de la ligne 31 figurent la pièce spéciale 25, la boucle de mou du film 24 avec une perforation 33 ainsi qu'une partie de la périphérie du tambour 13 contre laquelle s'applique le film, deux dents 17 étant engagées dans deux perforations 33. La partie située à gauche de la ligne 31 a été représentée avec un renvoi d'angle de 90° par rapport à ce qui est représenté à la figure 1, afin que les dessins qui correspondent aux différentes phases du cycle ne se superposent pas. A la figure 2 on a choisi arbitrairement l'origine du cycle en 2B, telle que la griffe 11 commence à se dégager du film. La boucle 24 est alors à son maximum, sa longueur utile par rapport à la pièce 25 étant toutefois nettement inférieure à la distance entre deux perforations. En 2C, pour la position 30°, la griffe amorce son retour en dessous du film, dans le sens de la flèche 34, et la boucle 24 commence à se résorber. En 2D, soit pour 90° la griffe atteint sensiblement une position médiane en dessous du film, la boucle 24 continuant à se résorber, la partie du film située sur la table d'exposition restant immobile. En 2E, pour environ 180° du cycle, la boucle 24 est complètement résorbée, le film étant juste au contact de la pièce 25, juste avant que la griffe ne pénètre dans une perforation. A partir de cet angle du cycle, le film est entraîné à partir du tambour 13. En 2F, pour l'angle 210° la griffe pénètre dans la perforation à partir du bord amont de celle-ci. En 2G, pour un angle de l'ordre de 240° la griffe, qui dans cette phase est en accélération constante dans le sens de la flèche 35 alors que le film est entraîné à vitesse constante par le tambour 13, atteint le bord aval de la perforation et entraîne à son tour le film. A partir de la phase 2G la boucle 24 recommence à se former, ce qui est représenté en 2H pour un angle de 270°. Le cycle se termine en 2I pour un angle de 360°. Les angles correspondant aux figures 2C à 2H ne sont donnés qu'à titre indicatif et peuvent varier selon le type d'appareil utilisé. Quelle que soit la phase du cycle considérée, la boucle 22, non figurée, est présente en amont de la table d'exposition. Sur la figure 2H figure en outre une partie de la roue dentée 15, limitée à l'espacement angulaire entre deux dents du tambour et comportant par exemple 24 dents (soit 144 dents pour un tambour à 6 dents). Il peut arriver que, pour une raison quelconque, le film n'occupe par une position correcte sur la table d'exposition par exemple en 2D. Par exemple le film peut être déchiré par la griffe avant que cette dernière n'arrive en fin de course ou bien, lorsque la griffe est dégagée, et en l'absence de contregriffe le film peut subir un décalage vers l'amont. Dans ce cas, selon la technique connue, la griffe ne rencontrerait plus une perforation au cycle suivant et le film ne serait plus entraîné par la griffe sur la table d'exposition ce qui conduirait à une altération des boucles de mou 24 et 22 et au bourrage de la caméra. Selon l'invention, au contraire, l'entraînement du film à partir du tambour 13 est anticipé, par rapport au fonctionnement normal, puisque la boucle 24 a été raccourcie de façon intempestive et on se retrouve avec la même configuration qu'en fonctionnement normal à partir de la phase 2E. Si au contraire le décalage parasite du film a lieu vers l'aval, il n'y a pas risque de bourrage puisqu'il est alors certain que la griffe rencontrera, pour un angle donné du cycle, la bonne perforation. La contregriffe quant à elle doit remplir deux fonctions qui sont d'assurer la stabilité du film pendant la prise de vues et de limiter les risques de bourrage comme indiqué ci-dessus. Selon l'invention, seule la première fonction demeure puisque la synchronisation entre la griffe et le film n'est plus assurée à partir de la contregriffe mais à partir du tambour débiteur aval (tambour 13). Pour les modes de réalisation selon lesquels la contregriffe est conservée, il faut s'assurer que son escamotage a lieu, au cours du cycle, avant que le film ne soit tendu contre la pièce spéciale 25.

La figure 3 représente, selon les mêmes écarts angulaires, avec la même origine qu'à la figure 2, différentes phases pour un mécanisme d'entraînement de film comportant une contregriffe. Elle permet aussi une comparaison avec l'art antérieur. La figure 3A représente la position du film par rapport à la table d'exposition, selon la technique antérieure. Les figures 3B et 3C représentent respectivement les positions de l'obturateur et de la contregriffe qui sont les mêmes selon l'art antérieur ou selon l'invention. La figure 3D représente la position du film par rapport à la table d'exposition selon l'invention. A l'origine du cycle, la griffe se dégage du film quelques degrés après que la contregriffe s'y est engagée. En a, pour environ 10°, l'obturateur commence à s'escamoter devant la fenêtre d'exposition. L'angle compris entre b et c, soit environ entre 120 et 150°, représente la couverture angulaire de la fenêtre par l'obturateur, la fenêtre d'exposition étant entièrement obturée à partir de c. En d, pour 160° environ, la contregriffe s'escamote sous l'action positive d'une came. A partir de e, soit pour 180° environ, le film commence, selon l'invention, à être entraîné à vitesse constante au-dessus de la table d'exposition par le débiteur aval. A partir de f soit pour 195° environ le film commence, selon l'art antérieur, à être entraîné par la griffe avec une certaine accélération au-dessus de la table d'exposition. En g, soit pour 240° environ la griffe relaye, selon l'invention, le débiteur pour l'entraînement du film. En h, pour 300°, la contregriffe commence à remonter et elle atteint en i le niveau du film. Entre l'angle i et 355° l'extrémité de la griffe s'appuie contre le bord du film avec une certaine pression sous l'action d'un ressort d'escamotage de la contregriffe jusqu'à ce qu'elle rencontre une perforation dans laquelle elle s'engage pour un angle de l'ordre de 355°.

Il est à noter que si le tambour débiteur 13 (figure 1) entraîne le film par au moins n dents en permanence, il n'y aura pas bourrage, avec le dispositif selon l'invention, pourvu que le nombre de perforations consécutives détériorées sur le film reste inférieur ou égal à n - 1. Dans le cas contraire, un décalage se produirait entre le tambour 13 et le film, et la synchronisation serait perdue. La probabilité pour qu'un tel événement se produise peut cependant être rendue très faible par augmentation de n.

Un autre mode de réalisation de l'invention est représenté à la figure 4 sur laquelle les mêmes références désignent les mêmes éléments qu'à la figure 1, avec les mêmes fonctions. Sur la figure 4, la pièce spéciale est un galet cylindrique 40 monté concentriquement et à rotation libre sur un axe 41. Bien que n'étant pas fixe lorsqu'il est au contact du film, le galet 40 remplit exactement la même fonction que la pièce spéciale 25 de la figure 1, puisqu'il reste toujours fixe en translation et que sa rotation ne modifie pas la longueur utile de la boucle aval du film à la sortie de la table d'exposition 10. Sur la figure 4 sont aussi représentés à titre d'exemple non limitatif des moyens d'ajustage de la longueur de la boucle de mou aval du film, lesdits moyens d'ajustage étant compatibles avec tous les modes de réalisation de l'invention décrits ci-dessous. Lesdits moyens d'ajustage, référencés 42, 43 et 44 consistent à positionner de façon adéquate un tambour débiteur 42 disposé juste en amont du noyau récepteur 7 par rapport à sa roue d'entraînement 15. Ceci est réalisé au moyen d'une vis 43 qui se visse dans la roue dentée 15 et qui est engagée librement dans une fente en arc de cercle 44 pratiquée concentriquement dans le sens axial à travers le tambour 42. Lorsque la position mutuelle correcte entre le tambour 42 et la roue 15 est obtenue, le serrage de la tête de la vis 43 contre la face correspondante du tambour 42 assure la fixité et le maintien de cette position mutuelle.

Il faut enfin noter que la présence d'une pièce spéciale telle que 25 ou 40, par exemple, est utile mais n'est pas indispensable à la mise en oeuvre de l'invention. En effet, la pièce spéciale peut être absente, les moyens de positionnement du mécanisme d'entraînement constitué par les tambours débiteurs et le mécanisme à griffe étant suffisants, pour cette mise en oeuvre, pourvu que l'on s'assure que, lorsque la boucle de mou aval du film est résorbée à chaque cycle de fonctionnement de la griffe, la partie de film tendue entre la sortie de la table d'exposition et le tambour débiteur aval ne présente en aucun point une courbure trop prononcée.

REVENDICATIONS :

1.        Appareil cinématographique de prises de vues ou de projection d'un film (23) muni de perforations (33), présentant un magasin (1) qui contient ledit film et qui est fermé par un couvercle, ledit appareil comportant un mécanisme à griffe (11) pour entraîner de façon intermittente ledit film, une table d'exposition (10) pour guider le film pendant son entraînement par la griffe (11), un noyau pour bobine débiteur de film (5) et un noyau pour bobine récepteur de film (7), au moins un tambour débiteur (13, 42) muni de dents régulièrement espacées au pas desdites perforations pour entraîner à vitesse constante le film juste en aval du noyau débiteur et juste en amont du noyau récepteur, et un mécanisme d'entraînement pour entraîner en synchronisme le mécanisme à griffe et le (les) tambour(s) débiteur(s), un espace étant prévu à l'entrée et à la sortie de ladite table d'exposition pour permettre la formation de boucles de mou amont (22) et aval (24) du film, caractérisé en ce que l'appareil est muni de moyens d'ajustage en aval de la table d'exposition pour ajuster la longueur de la boucle de mou aval afin que ladite boucle de mou aval du film située à la sortie de la table d'exposition soit résorbée, après chaque prise de vue, juste avant l'instant où ladite griffe pénètre dans une perforation du film avec un mouvement de translation destiné à entraîner ledit film, la longueur utile de ladite boucle de mou aval du film étant toujours inférieure à l'espacement entre deux vues du film.

2.        Appareil cinématographique de prises de vues ou de projection selon la revendication 1, caractérisé en ce que ledit mécanisme d'entraînement est muni de moyens de positionnement (43, 44) pour ajuster mutuellement la position en rotation desdites dents du tambour débiteur entraînant le film en aval de la table d'exposition par rapport à une position donnée de la griffe afin que ladite boucle de mou aval du film située à la sortie de la table d'exposition soit résorbée, après chaque prise de vue, juste avant l'instant où ladite griffe pénètre dans une perforation du film avec un mouvement de translation destiné à entraîner ledit film, la longueur utile de ladite boucle de mou aval du film étant toujours inférieure à l'espacement entre deux vues du film.

3.        Appareil cinématographique de prises de vues ou de projection selon la revendication 1 ou 2, caractérisé en ce qu'il comporte en outre une pièce spéciale fixe au moins en translation (25 ou 40) in-

terposée sur le trajet du film entre la sortie de ladite table d'exposition et ledit tambour débiteur situé juste en amont du noyau récepteur, la disposition et le profil de ladite pièce spéciale étant conçus pour que ladite boucle de mou aval du film située à la sortie de la table d'exposition soit résorbée, après chaque prise de vue, juste avant l'instant où ladite griffe pénètre dans une perforation du film avec un mouvement de translation destiné à entraîner ledit film, la longueur utile de ladite boucle de mou aval du film étant toujours inférieure à l'espacement entre deux vues du film.

4. Appareil cinématographique de prises de vues ou de projection selon la revendication 3, caractérisé en ce que ladite pièce spéciale fixe est solidaire de ladite table d'exposition du film.

5. Appareil cinématographique de prises de vues ou de projection selon la revendication 3, caractérisé en ce que ladite pièce spéciale fixe est solidaire dudit couvercle du magasin de l'appareil.

6. Appareil cinématographique de prises de vues ou de projection selon l'une des revendications 3 à 5, caractérisé en ce que ladite pièce spéciale fixe a une position réglable.

7. Appareil cinématographique de prises de vues ou de projection selon l'une des revendications 1 à 6, caractérisé en ce que la position en rotation dudit tambour débiteur situé juste en amont du noyau récepteur est réglable par un positionnement adéquat de sa roue dentée d'entraînement qui lui est solidaire, par rapport à son pignon d'entraînement.

8. Appareil cinématographique de prises de vues ou de projection selon l'une des revendications 1 à 6, caractérisé en ce que la position en rotation dudit tambour débiteur situé juste en amont du noyau récepteur est réglable par rapport à sa roue dentée d'entraînement dont il est ensuite rendu solidaire.

FIG.1

FIG. 3

1-Ⅲ-PHF 79-534

FIG. 2

FIG. 4

0021529

Office européen
des brevets

**RAPPORT DE RECHERCHE EUROPEENNE**

Numéro de la demande

EP 80 20 0578

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | FR - E - 41 247 (DEMICHEN)<br>* En entier *<br><br>-- | 1 | G 03 B 1/58 |
| A | US - A - 2 407 795 (NELSON)<br>* Colonne 3, lignes 21-49 *<br><br>---- | 1 | |

**DOMAINES TECHNIQUES RECHERCHES (Int. Cl. 3)**

G 03 B 1/58
 1/56
 1/42
 1/24
 1/22

**CATEGORIE DES DOCUMENTS CITES**

X: particulièrement pertinent
A: arrière-plan technologique
O: divulgation non-écrite
P: document intercalaire
T: théorie ou principe à la base
 de l'invention
E: demande faisant interférence
D: document cite dans
 la demande
L: document cité pour d'autres
 raisons

&: membre de la même famille,
 document correspondant

Le présent rapport de recherche a été établi pour toutes les revendications

| Lieu de la recherche | Date d'achèvement de la recherche | Examinateur |
|---|---|---|
| La Haye | 10-09-1980 | MEES |

OEB Form 1503.1  06.78